# EUROPÄISCHE PATENTSCHRIFT

(11) **EP 1 827 769 B1**
(45) Veröffentlichungstag und Bekanntmachung des Hinweises auf die Patenterteilung: **24.02.2010**
(21) Anmeldenummer: 05805836.3
(22) Anmeldetag: 10.11.2005
(51) Int. Cl.: B25J 9/00

(54) **HANDLINGVORRICHTUNG UND VERFAHREN ZUM MEHRACHSIGEN HANDHABEN UND FÜHREN VON AUF EINER TRAGEEINRICHTUNG ANGEORNDETEN WERKSTÜCKEN**
HANDLING DEVICE AND METHOD MULTIAXIAL HANDLING AND GUIDING WORKPIECES ARRANGED ON A SUPPORTING DEVICE
DISPOSITIF DE MANIPULATION ET PROCEDE POUR LA MANIPULATION ET LA CONDUITE MULTI-AXIALES DE PIECES A USINER PLACEES SUR UN DISPOSITIF PORTEUR

(30) Priorität: 17.11.2004 DE 202004017881 U
(43) Veröffentlichungstag der Anmeldung: 05.09.2007
(73) Patentinhaber: KUKA Systems GmbH, 86165 Augsburg (DE)
(72) Erfinder: HARTMANN, Gerhard, 86485 Biberbach (DE); RADLER, Jürgen, 89343 Jettingen-Scheppach (DE)
(74) Vertreter: Ernicke, Klaus Stefan
(86) Internationale Anmeldenummer: PCT/EP2005/012022
(87) Internationale Veröffentlichungsnummer: WO 2006/053672

(56) Entgegenhaltungen:
- WO-A-00/71292
- DE-A1- 19 713 860
- PATENT ABSTRACTS OF JAPAN Bd. 013, Nr. 535 (M-899), 29. November 1989 (1989-11-29) -& JP 01 218983 A (PRESS KOGYO KK), 1. September 1989 (1989-09-01)

## Beschreibung

Die Erfindung betrifft eine Handlingvorrichtung und ein Verfahren zum mehrachsigen Handhaben und Führen von Werkstücken, insbesondere Karosseriebaugruppen, in einer Bearbeitungsstation.

Aus der DE 197 13 860 A1 ist ein Verfahren und eine Vorrichtung zum Fertigen von komplexen Werkstücken bekannt, bei der innerhalb der Arbeitsstationen Zuführroboter angeordnet sind, welche die an einem Spannrahmen gehaltenen Werkstückteile in die Bearbeitungsstation zuführen und dort über geeignete stationäre Positioniervorrichtungen am Stationsrahmen positionieren oder die Spannrahmen zu einem käfigartigen Spannrahmengehäuse zusammensetzen und gegenseitig verbinden. Das Werkstück und der Spannrahmen bzw. das Spannrahmengehäuse sind während des Bearbeitungsprozesses in der Arbeitsstation stationär gehalten und gespannt. Außerhalb der Arbeitsstationen sind Transporteinheiten aus jeweils zwei kooperierenden Transferrobotern angeordnet, die einzeln oder gemeinsam ein Transportwerkzeug handhaben. Die Transferroboter befinden sich zwischen den Arbeitsstationen und dienen zum Transport der Werkstücke von der einen in die nächste Arbeitsstation und treten erst nach Beendigung des Bearbeitungsprozesses in den Arbeitsstationen in Funktion.

Die WO 00/71292 A1 befasst sich mit der fliegenden Halterung und Führung eines Werkstückhalters durch einen einzelnen Roboter. Hierbei wird der exzentrisch gehaltene Werkstückhalter zum Ausgleich der ungünstigen Angriffslage und der Kräfte und Momente am anderen Ende an einer stationären Säule mittels einer Zentrieraufnahme beweglich abgestützt. Die Abstützung ist lösbar und wird nur durch die Anpresskraft des Roboters aufrecht erhalten.

Eine andere Handlingvorrichtung ist aus der Praxis bekannt. Sie besteht aus einem einzelnen Manipulator, z.B. einem mehrachsigen Gelenkarmroboter, der eine Greifeinrichtung mit einem daran gehaltenen Bauteil trägt und führt. Der Einsatzbereich ist auf relativ kleine und leichtgewichtige Werkstücke beschränkt.

Die Erfindung hat die Aufgabe, eine Handlingtechnik aufzuzeigen, die auch für größere und schwergewichtige Werkstücke, insbesondere Karosseriebaugruppen, geeignet ist.

Die Erfindung löst diese Aufgabe mit den Merkmalen im Verfahrens- und Varrichtungshauptanspruch. Mit der beanspruchten Handlingvorrichtung und dem Handlingverfahren ist es möglich, große und schwergewichtige werkstücke, insbesondere Karosseriebaugruppen, mittels einer Trageinrichtung zu handhaben und während des Bearbeitungsprozesses relativ zu ein oder mehreren Bearbeitungsvorrichtungen zu bewegen. Hierbei kann das Werkstück in verschiedene prozessgünstige Lagen und Orientierungen gebracht werden.

Beim Schmelzschweißen, z.B. Schutzgasschweißen, kann das Werkstück derart gehalten und geführt werden, dass sich an der Schweißstelle eine sog. Wannenlage ergibt, die ein Abfließen der Schmelze verhindert. Ähnliche Vorteile ergeben sich bei anderen Bearbeitungsprozessen, z.B. dem Kleben oder Abdichten. Das Werkstück kann auch auf den Kopf gestellt werden, wodurch seine Unterseite eine prozessgünstige Lage erhält. Das pastöse Klebemittel oder Dichtmittel kann von oben her aufgebracht und am Abfließen gehindert werden.

Die Trageinrichtung hat den Vorteil, dass sie das Werkstück von unerwünschten Belastungen und Verformungen freihält. Wenn z.B. einer der Manipulatoren eine Störung hat und stehen bleibt, vergehen bis zur Reaktion des oder der anderen Manipulatoren eine gewisse Reaktionszeit. Die dabei auftretenden Kräfte und Bewegungen werden von der Trageinrichtung aufgenommen.

Die mehrachsig beweglichen Manipulatoren, vorzugsweise in Form von mehrachsigen Gelenkarmrobotern, haben den Vorteil, dass sie gemeinsam die Trageinrichtung und das Werkstück auf verschiedensten Bahnen und mit unterschiedlichsten Lagen und Orientierungen bewegen und handhaben können. Die Manipulatoren bewegen sich dabei in einer entsprechend gegenseitig abgestimmten Weise und werden hierzu vorzugsweise von einer gemeinsamen Steuerung oder von mehreren gekoppelten Steuerungen beaufschlagt. Über Andockstellen an der Trageinrichtung können die Trag-und Führungskräfte eingeleitet werden. An diesem Stellen kann auch eine Zuführung von Betriebsmitteln, z.B. Druckluft, Leistungs- und Signalströmen, Kühlmittel etc. von außen zur Trageinrichtung und ggf. weiter zum Werkstück erfolgen. Insbesondere lassen sich hierüber zusätzliche Aktoren an der Trageinrichtung mit Energie versorgen und steuern.

Für die Ausbildung der Trageinrichtung gibt es verschiedene Möglichkeiten. Die Gestaltung als Tragrahmen nimmt besonders gut die von außen im Störungsfall oder auch während des Prozessbetriebs eingeleiteten Kräfte und Bewegungen auf und hält das Werkstück weitgehend belastungsfrei. Aus Gewichtsgründen und wegen der Traglast der Manipulatoren empfiehlt sich eine Leichtbauweise. Wenn besonders hohe Werkstückgewichte zu handhaben sind, können alternativ auch Tragbalken, ggf. in Mehrfachanordnung und in Verbindung mit mehr als zwei Manipulatoren eingesetzt werden.

Die beanspruchte Handlingvorrichtung hat den Vorteil, dass die Werkstücke immer in Vorzugslage bearbeitet werden können. Ferner können in der Bearbeitungsstation der Bearbeitungsbereich und der Aufnahme- bzw. der Förderbereich räumlich voneinander getrennt und distanziert werden, was Vorteile bezüglich der Verschmutzungssituation im Bearbeitungsbereich mit sich bringt. Der Aufnahme- bzw. der Förderbereich wird von Verschmutzungen oder anderen unerwünschten Einflüssen oder Auswirkungen des Bearbeitungsprozesses frei gehalten. Hiervon wird allenfalls die Trageinrichtung, nicht aber die andere Fördertechnik belastet. Bezüglich der Verschmutzungsgefahr ist es ferner günstig, dass die Bearbeitungs- und Robotertechnik wegen des verbesserten Handlings nicht mehr unter dem Werkstück plaziert werden muss. Dies ist z.B. zum Schweißen, Kleben oder Beschichten von Karosseriebodengruppen von Vorteil. Durch das verbesserte Handling können die Unterbodenpartien von oben her bearbeitet werden, so dass keine Schweiß- oder Materialspritzer mehr auf die Bearbeitungsvorrichtungen regnen.

Günstig ist es ferner, dass durch die Trageinrichtung bei einem Nothalt das Werkstück und insbesondere eine Karosserie, leicht aus der Tragvorrichtung ausgehoben und geborgen werden kann. Der Bearbeitungsprozess kann dadurch in einer anderen Bearbeitungsstation ohne wesentliche Verzögerung weiter gehen. Günstig ist es auch, dass der Arbeitsbereich der Manipulatoren beim Handling unabhängig von der Werkstücklänge bzw. Karosserielänge ist. Hierzu ist es günstig, wenn die Tragvorrichtung ein für alle Werkstücktypen ausreichend großes Maß hat. Das Handling wird außerdem erleichtert, wenn bei den in der Regel länglichen Werkstücken oder Karosserien die Andockstellen an den Schmalseiten der Trageinrichtung angeordnet sind.

Die beanspruchte Handlingtechnik hat ferner den Vorteil, dass sie eine gute Zugänglichkeit der Bearbeitungsstation und auch des Bearbeitungs- und Aufnahmebereiches zu Programmierzwecken bietet. Die in Bearbeitungsstationen bisher üblichen Bühnen sind entbehrlich. Die Handlingtechnik sorgt ferner für eine höhere Inbetriebnahme- und Wartungsfreundlichkeit. Auch die Flexibilität wird verbessert, weil durch die Manipulatoren, insbesondere in Form von mehrachsigen Gelenkarmrobotern, eine freie Programmierbarkeit der Handlingbewegungen gegeben ist.

Die Trageinrichtung bietet durch die Tragarme die Möglichkeit, das Werkstück sehr sicher und positionsgenau zu halten. Hierfür ist es günstig, wenn die Tragarme mit entsprechend gestalteten Aufnehmern an speziellen Bezugspunkten des Werkstücks, z.B. den Masterholes einer Karosserie, angreifen. Diese Bezugsstellen haben häufig eine mechanische Verstärkung und erlauben die Aufnahme und Abstützung des Karosseriegewichts. Durch entsprechend gestaltete Aufnehmer ist hier auch eine nach allen Richtungen formschlüssige Aufnahme und Halterung der Karosserie möglich, was für Überkopfbewegungen und auch räumliche Schwenkbewegungen der Trageinrichtung mitsamt der Karosserie von Vorteil ist. Ein umlaufender Tragrahmen mit einem freien Innenraum hat hierbei den Vorteil, dass die Unterseite des Werkstücks für Bearbeitungsprozesse zum größten Teil frei zugänglich ist.

Die Trageinrichtung kann durch eine bewegliche Anordnung der Tragarme flexibilisiert werden und auf unterschiedliche Werkstücke bei Bedarf angepasst werden. Mittels einer Stelleinrichtung mit externen oder internen Stellantrieben können die Tragarme dank ihrer Verstellbarkeit in ein oder mehreren Achsen, z.B. mittels entsprechender Schlitten, in die gewünschte Position gebracht werden. In dieser Stellung lassen sie sich mit einer Blockiereinrichtung verriegeln. Die Blockiereinrichtung kann eine Notfallsteuerung aufweisen, mit der im Falle eines Nothalts und bei Ausfall der Energieversorgung die Blockiereinrichtung automatisch den Zugriff löst und die Tragarme in ihren Stellachsen freigibt. Das Werkstück kann dann frei schwimmend an der Trageinrichtung gehalten werden, was in den Fällen eines Nothalts zur Werkstückentlastung von Vorteil ist.

Die Anordnung einer Positioniereinrichtung mit einem Positionsaufnehmer hat zum einen den Vorteil, dass die Fördertechnik für das Werkstück relativ ungenau sein kann, so dass Positionstoleranzen kompensiert und das Werkstück von der Trageinrichtung lagegenau aufgenommen werden kann. Hierbei kann wahlweise die Trageinrichtung relativ zum Werkstück oder das Werkstück relativ zur Trageinrichtung ausgerichtet werden. Über den Positionsaufnehmer ist außerdem eine Ermittlung des Werkstücktyps und vor allem der Lage der zur Aufnahme vorgesehenen Bezugspunkte am Werkstück möglich.

Die Erfindung betrifft außerdem eine Bearbeitungsstation und eine aus mehreren Bearbeitungsstationen bestehende Fertigungsanlage. Durch die Handlingtechnik innerhalb der Bearbeitungsstation kann die andere stationsgebundene Fördertechnik und auch die Fördertechnik innerhalb der Fertigungsanlage verbessert werden. Durch mehrere parallele Förderlinien mit Querverbindungen ist eine Entkoppelung der Bearbeitungsstationen und der Fertigungsanlage vom Bearbeitungstakt möglich. Die einzelnen Bearbeitungsstationen können mit den Werkstücken selektiv angefahren werden, wobei Überholstrecken und Ausweichstrecken vorhanden sind. Die Reihenfolge der Werkstücke kann sich dadurch innerhalb der Fertigungsanlage und des Bearbeitungsfortschritts ändern. Innerhalb der Bearbeitungsstationen können die Bearbeitungsprozesse dadurch beliebig lange und stationsweise unterschiedlich lange Zeiten dauern. Dies optimiert die Flexibilität der Fertigungsanlage, in der verschiedenste Werkstücktypen, insbesondere Karosserietypen, gefahren werden können.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf eine Handlingvorrichtung in einer Bearbeitungsstation,
- Figur 2:: eine Stirnansicht der Handlingvorrichtung gemäß Pfeil II von Figur 1,
- Figur 3:: eine perspektivische Ansicht der Bearbeitungsstation von Figur 1 und 2,
- Figur 4 bis 6:: drei geklappte Ansichten einer rahmenförmigen Trageinrichtung,
- Figur 7 und 8:: perspektivische Ansichten der Trageinrichtung von Figur 4 bis 6,
- Figur 9:: eine abgebrochene Detailansicht der Aufnahmestelle des Werkstücks an der Trageinrichtung,
- Figur 10:: eine Draufsicht auf eine rahmenförmige Trageinrichtung mit zwei Antriebsvarianten,
- Figur 11:: eine Variante der Trageinrichtung mit Tragbalken in Draufsicht,
- Figur 12:: eine Detailansicht der Aufnahmestelle an einem Masterhole und
- Figur 13:: eine schematische Ansicht einer Fertigungsanlage.

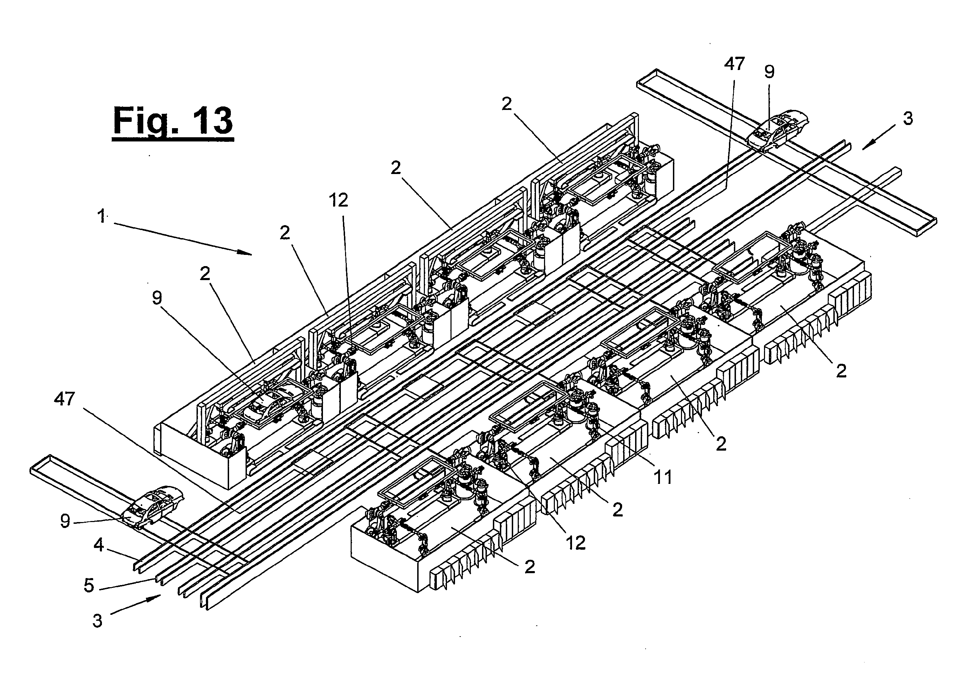

Die Erfindung betrifft eine Handlingvorrichtung und ein Verfahren zum mehrachsigen Handhaben und Führen von Werkstücken (9) in einer Bearbeitungsstation (2). Die Erfindung betrifft darüber hinaus die Gestaltung dieser Bearbeitungsstation (2) und ferner eine aus mehreren Bearbeitungsstationen (2) bestehende Fertigungsanlage (1), wie sie beispielsweise in Figur 13 dargestellt ist.

Die Werkstücke (9) können von beliebiger Art und Größe sein. Sie können aus beliebig vielen Teilen bestehen. In der bevorzugten Ausführungsform handelt es sich um Karosseriebaugruppen von Fahrzeugen. Dies können komplette Rohkarosserien sein, wie sie in den Zeichnungen dargestellt sind. Alternativ können es einzelne Karosseriebaugruppen, z.B. eine Bodengruppe, eine Seitenwandgruppe oder dergleichen sein.

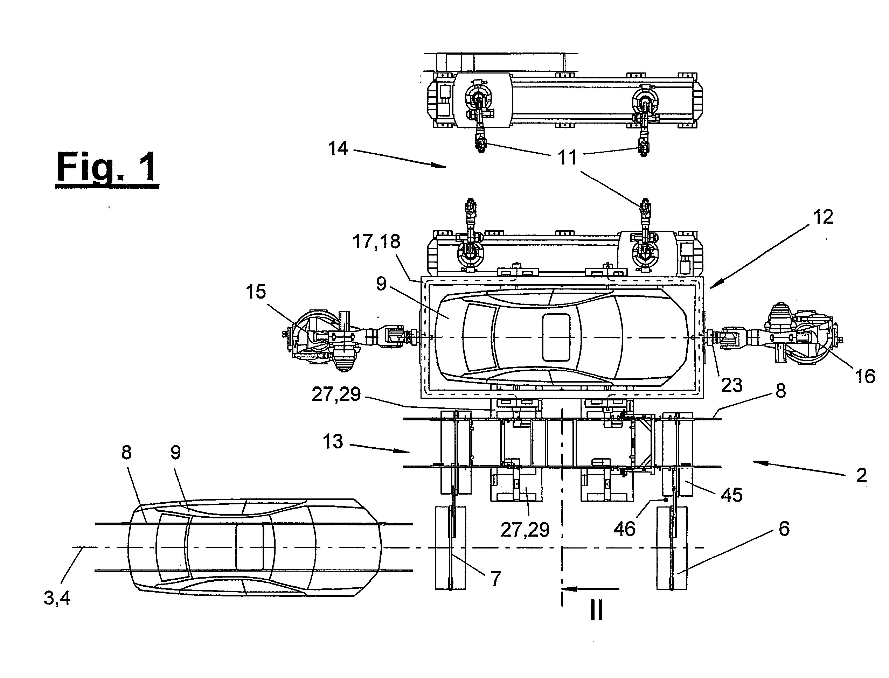

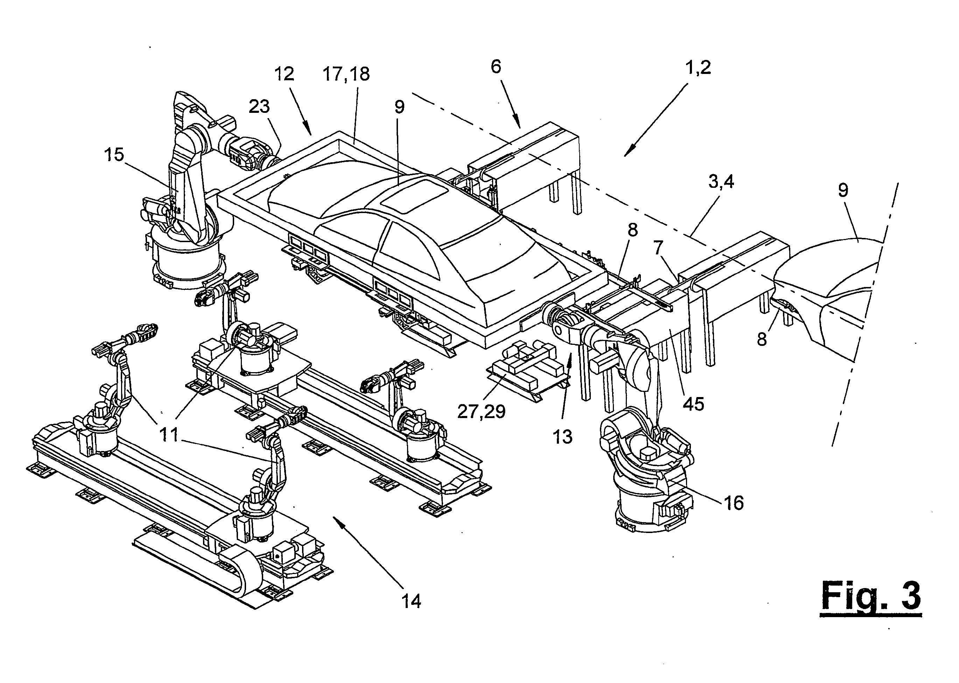

In den Bearbeitungsstationen (2) werden die Werkstücke (9) ein oder mehreren beliebig ausgebildeten Bearbeitungsprozessen unterworfen. Dies können z.B. Fügeprozesse unterschiedlicher Art wie Schweißen, Kleben, Clinchen oder dergleichen sein. Auch Beschichtungsprozesse wie Nahtabdichten, Versiegeln, Lackieren oder dergleichen sind möglich. In der Bearbeitungsstation (2) sind zumindest ein Bearbeitungsbereich (14) und ein Aufnahmebereich (13) für das Werkstück (9) vorhanden, die räumlich getrennt und distanziert, z.B. nebeneinander angeordnet sind. Alternativ können sie übereinander angeordnet sein. Die nachfolgend erläuterte Handlingvorrichtung (12) bedient beide Bereiche (13,14). Mit der Handlingvorrichtung (12) wird das Werkstück (9) zwischen den Bereichen (13,14) hin- und hertransportiert und außerdem zumindest im Bearbeitungsbereich (14) in der prozessgünstigen Weise mit mehrachsigen Bewegungen gehandhabt und geführt. Diese Handhabung kann während des oder der Bearbeitungsprozesse stattfinden. Im Aufnahmebereich (13) wird das Werkstück (9) aufgenommen und nach der Bearbeitung wieder abgegeben. Die beiden Bereiche (13,14) sind in der Praxis eng benachbart. In Figur 1 bis 3 sind sie aus Gründen der Übersichtlichkeit mit größerem gegenseitigen Abstand dargestellt.

Der Aufnahmebereich (13) kann an eine separate Übergabestelle (6) einer Fördereinrichtung (3) angeschlossen sein. Von der Übergabestelle (6) können die vorzugsweise auf Förderelementen (8), z.B. sog. Skids, gehaltenen Werkstücke (9) von der Fördereinrichtung (3) ausgeschleust und zum Aufnahmebereich (13) mittels eine Zwischenförderers (7) gebracht werden. Diese Gestaltung wird nachfolgend im einzelnen erläutert.

Die Handlingvorrichtung (12) besteht aus mehreren mehrachsig beweglichen Manipulatoren (15,16), die gemeinsam eine Trageinrichtung (17) in aufeinander abgestimmten Bewegungen handhaben und führen. Auf der Trageinrichtung (17) kann das Werkstück (9) angeordnet werden, wobei die Anordnung je nach Handlingkinematik ein loses Aufsetzen und Abstützen oder ein nach allen Richtungen formschlüssiges Halten und Führen sein kann.

Die Manipulatoren (15,16) können in beliebig geeigneter Weise ausgebildet sein. Im gezeigten und bevorzugten Ausführungsbeispiel handelt es sich um mehrachsige Gelenkarmroboter, die z.B. sechs rotatorische Achsen haben. Darüber hinaus können die Roboter Zusatzachsen, z.B. Fahrachsen, besitzen. Die Manipulatoren (15,16) können ansonsten z.B. als Linearroboter mit drei translatorischen Achsen ausgestaltet sein. Zur Erzielung der abgestimmten Bewegungen haben die Manipulatoren (15,16) vorzugsweise eine gemeinsame Steuerung (nicht dargestellt) oder alternativ gekoppelte Steuerungen.

Die Manipulatoren (15,16) greifen an der Trageinrichtung (17) über geeignete Andockstellen (23) an, die an mindestens zwei verschiedenen Seiten der Trageinrichtung (17) angeordnet sind. Im gezeigten Ausführungsbeispiel sind die Andockstellen (23) an den Schmalseiten der Trageinrichtung (17) und einander gegenüber liegend angeordnet. Die Andockstellen (23) sind einerseits mechanische Verbindungsstellen zwischen dem Manipulatoranschluss, z.B. einer Roboterhand, und der Trageinrichtung (17). Über die Andockstellen (23) können außerdem Betriebsmittelverbindungen geschaffen werden. Die Andockstellen (23) können in beliebig geeigneter konstruktiver Weise ausgebildet sein. Vorzugsweise handelt es sich um Wechselkupplungen, die ein Lösen der Trageinrichtung (17) von den Manipulatoren (15,16) und ggf. einen Austausch gegen eine andere Trageinrichtung (17) ermöglichen. Hierfür kann in der Bearbeitungsstation (2) ein Magazin (nicht dargestellt) für verschiedene Trageinrichtungen (17) vorhanden sein.

In der in Figur 1 bis 3 gezeigten Ausführungsform greifen die Manipulatoren (15,16) die Trageinrichtung (17) mit dem darauf befindlichen und gehaltenen Werkstück (9) an den beiden Stirnseiten und nehmen durch entsprechend in gegenseitiger Abstimmung gesteuerte Manipulatorbewegungen das im Aufnahmebereich (13) und ggf. auch auf dem Skid (8) befindliche Werkstücke (9) mit der Trageinrichtung (17) auf und bewegen es in den Bearbeitungsbereich (14). Während des Bearbeitungsprozesses bewegen die Manipulatoren (15,16) die Trageinrichtung (17) und das Werkstück (9) in prozessgünstiger Weise. Ggf. wird das Werkstück (9) hierbei auch gekippt oder auf den Kopf gestellt. Zu diesen Zwecken ist es in entsprechend formschlüssiger Weise an der Trageinrichtung (17) gehalten. Nach der Bearbeitung bringt die Handlingvorrichtung (12) das Werkstück (9) wieder zurück in den Aufnahmebereich (13) und setzt es auf dem dort ggf. wartenden Skid (8) wieder ab.

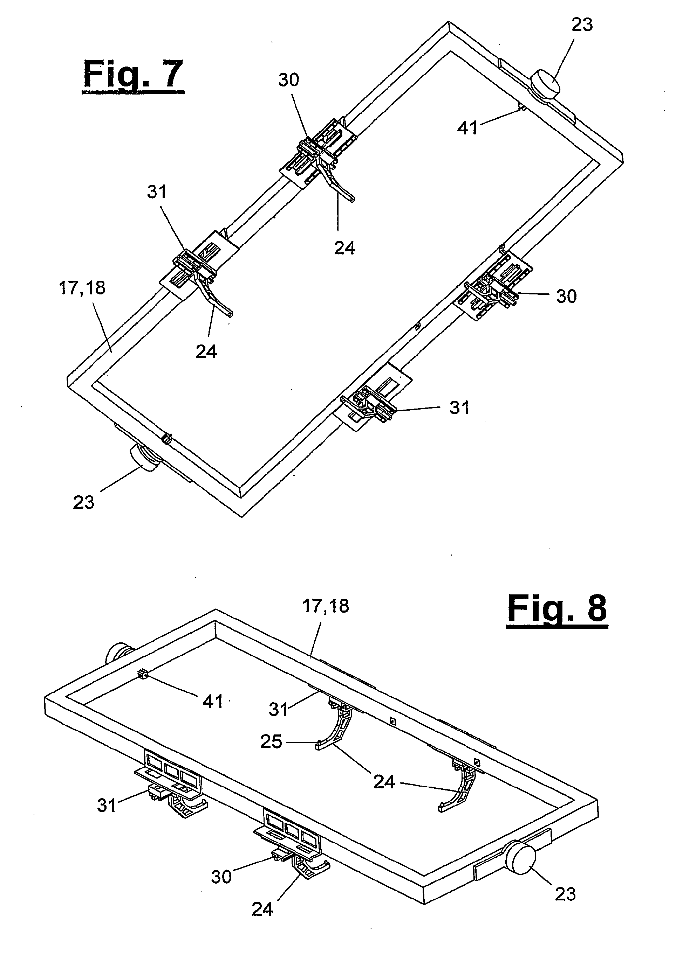

Die Trageinrichtung (17) ist in der gezeigten Ausführungsform von Figur 1 bis 10 als Tragrahmen (18) ausgebildet. Der Tragrahmen (18) ist vorzugsweise verwindungssteif ausgebildet und besitzt ein umlaufendes und das Werkstück (9) außenseitig umgebendes Rahmengestell (19), welches einen innenliegenden Freiraum (20) aufweist. In diesen Freiraum(20) wird das Werkstück (9) aufgenommen. Der Tragrahmen (18) hat eine im wesentliche rechteckige Form und besitzt an den beiden Schmalseiten jeweils mittig eine Andockstelle (23).

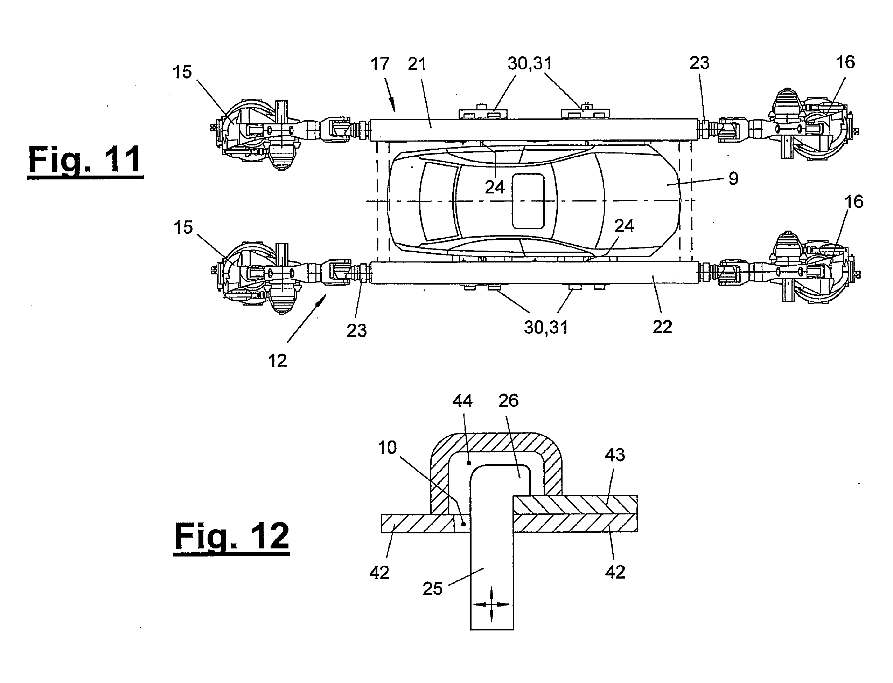

Figur 11 zeigt eine Variante, in der die Trageinrichtung (17) aus ein oder mehreren Tragbalken (21,22) besteht, die jeweils stirnseitig eine Andockstelle (23) für einen Manipulator (15,16) haben. In dieser Ausführungsform sind z.B. vier Manipulatoren (15,16) vorhanden und bewegen gemeinsam und in gegenseitig abgestimmten Bewegungen die beiden Tragbalken (21,22) mit dem darauf gehaltenen Werkstück (9). Die Tragbalken (21,22) können ggf. untereinander querverbunden sein. Wenn z.B. Roboter (15,16) mit einer Traglast von jeweils 500kg, eingesetzt werden, können in der in Figur 11 gezeigten Ausführungsform die Trageinrichtung und das Werkstück (9) zusammen ein Gewicht von 2000kg haben. In der Variante von Figur 1 bis 10 mit zwei. Robotern (15,16) kann das Gewicht 1000kg betragen.

Für maximale Nutzlasten ist die Trageinrichtung (17) in Leichtbauweise ausgeführt. Hierfür bestehen der Tragrahmen (18) oder die Tragbalken (21,22) vorzugsweise aus Leichtwerkstoffen, z.B. Carbonfaserwerkstoffen, Glasfaser verstärkten Kunststoffen oder dgl.

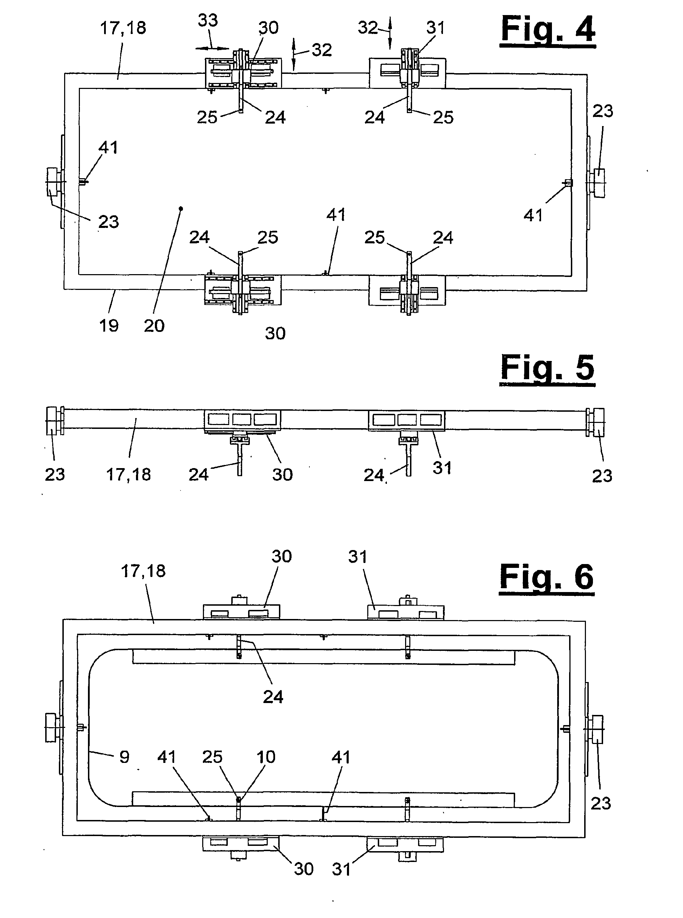

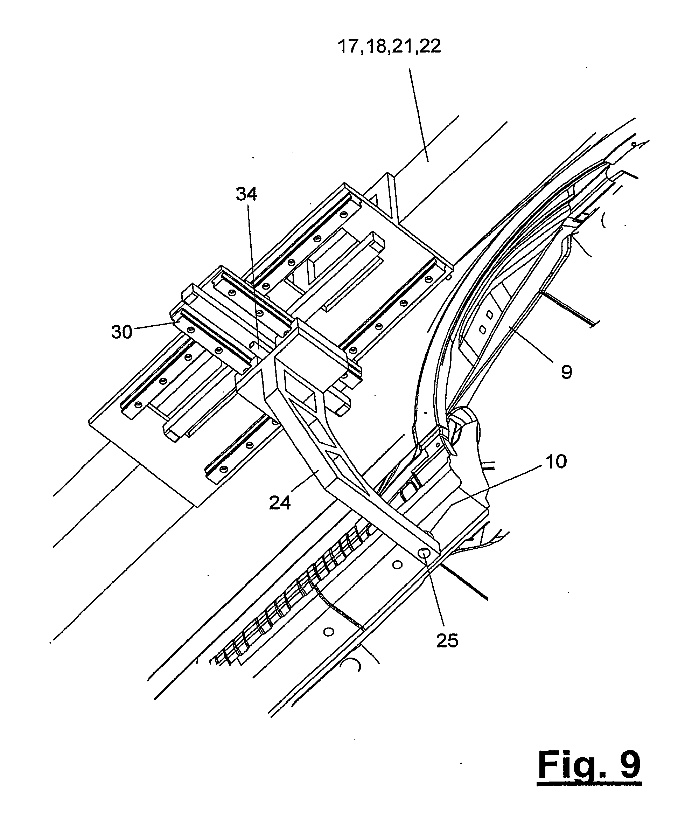

Die Trageinrichtung (17) besitzt in den verschiedenen Varianten jeweils mehrere Tragelemente (24) zur Aufnahme des Werkstücks (9), die in beliebiger Art ausgestaltet und in beliebiger Zahl vorhanden sein können. Die Tragelemente (24) sind in den gezeigten Ausführungsformen z.B. als Tragarme ausgebildet. Die Tragarme (24) besitzen eine gebogene Form und sind vorzugsweise an der Unterseite der Trageinrichtung (17) angeordnet. Sie ragen dadurch seitlich in den Freiraum (20) des Tragrahmens (18) oder ragen seitlich von den Tragbalken (21,22) weg. Die Tragarme (24) tragen vorzugsweise am freien Ende mindestens einen Aufnehmer (25), der an einen Bezugspunkt (10) des Werkstücks (9) angepasst ist. Der Bezugspunkt (10) des Werkstücks befindet sich vorzugsweise an dessen Unterseite und ist z.B. ein im Unterboden angebrachtes Masterhole. Figur 6, 9 und 12 verdeutlichen diese Anordnung. Figur 9 zeigt hierbei eine abgebrochene perspektivische Unteransicht des Seitenschwellers. Im Falle eines Masterholes ist der Aufnehmer (25) als vorstehender und insbesondere hochragender Dorn oder Stift ausgebildet und greift formschlüssig von unten in das. Masterhole.

Alternativ können Masterholes seitlich am Werkstück (9) angebracht sein, wobei die Tragarme (24) und die Aufnehmer (25) eine entsprechend angepasste andere Anordnung und Ausrichtung haben. Im weiterer Abwandlung ist es möglich, dass der Bezugspunkt (10) ein Vorsprung ist. Der hierzu komplementäre Aufnehmer (25) ist dann ein Ring oder ein anderes Teil mit einer Aufnahmeöffnung für den Vorsprung.

Wenn das Werkstück (9) mit einer begrenzten Kinematik in lagestabiler Ausrichtung bewegt wird und stets mit ruhendem Schwerpunkt auf der Trageinrichtung (17) gehalten ist, können die Aufnehmer (25) die Form von einfachen und im wesentlichen geraden Stiften oder Dornen haben. Zur Verbesserung des Eingriffs am Masterhole kann eine Kegelform vorhanden sein.

Figur 12 zeigt eine andere Gestaltung des Aufnehmers (25), der in diesem Fall ein Halteelement (26) zum formschlüssigen Hintergreifen des Bezugspunktes (10) am Werkstück (9) und eine zugehörige Zusatzkinemätik aufweist. Dies kann z.B. eine seitlich vorstehende Klemmnase sein, die mit einer aus zwei Blechen (42,43) verstärkten Unterlage am Masterhole (10) in Kontakt kommt und diese formschlüssig hintergreift. Am Masterhole (10) ist in der Karosserie z.B. eine Kapsel vorhanden, die das Masterhole (10) überdeckt und einen Freiraum (44) zum Eintauchen des Halteelements (26) bietet. Auf der anderen Seite des Masterholes (42) kann ein dünneres Karosserieblech (42) vorhanden sein. Mit dieser Gestaltung des Aufnehmers (25) kann das Werkstück (9) über die verschiedenen Tragarme (24) nach allen Richtungen hin formschlüssig gehalten und geführt werden, wobei auch Kipplagen und Überkopf-Stellungen möglich sind.

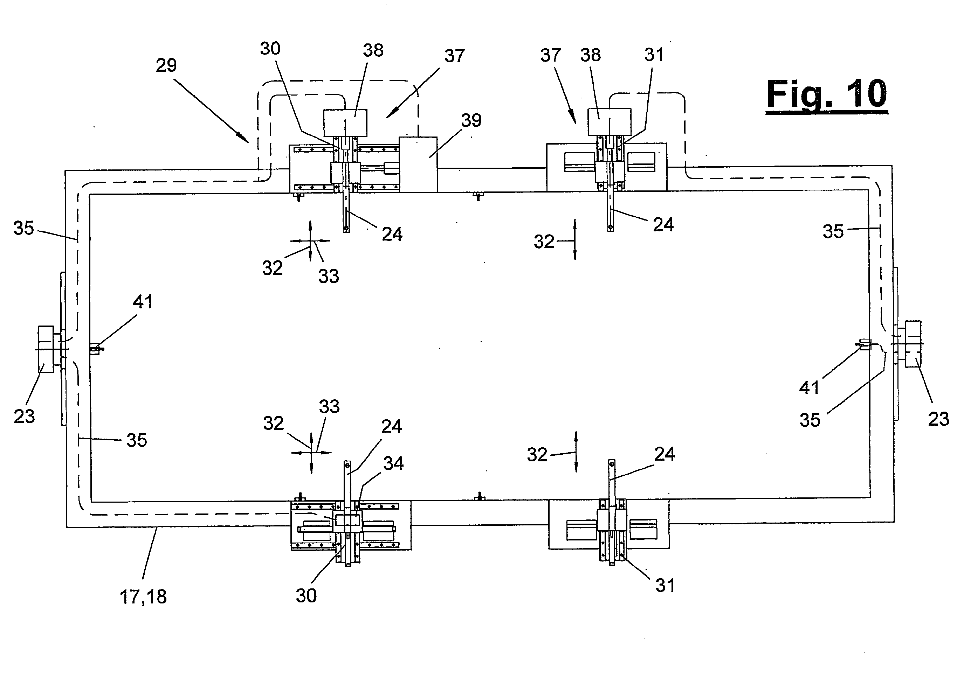

Die Trageinrichtung (17) kann ferner ein oder mehrere Haltevorrichtungen (41) für Werkstückteile aufweisen. Dies können z.B. innenseitig am Tragrahmen (18) oder an den Tragbalken (21,22) angebrachte bewegliche Schließzylinder sein, die gegen das Werkstück (9) drücken. Figur 6 zeigt z.B. eine solche Anordnung in der unteren Bildhälfte. Mit diesen Haltevorrichtungen (41), die vorzugsweise rund um die Werkstückkontur verteilt angeordnet sind, kann eine seitliche Klemm- oder Haltekraft auf das Werkstück (9) und dessen Teile ausgeübt werden. Hierdurch können außerdem Toleranzen zwischen Aufnehmern (25) und Bezugspunkten (10) aufgenommen werden. Ferner können die Haltevorrichtungen (41) beweglichen Teile am Werkstück (9), z.B. Motorhaube oder Kofferraumdeckel, an einer Karosserie sichern und festhalten. Mittels der nach unten ragenden Tragarme (24) kann die Karosserie versenkt in der Trageinrichtung (17) gehalten werden, so dass die Haltevorrichtungen (41) in der richtigen Höhenlage angreifen können. Die Haltevorrichtungen (41) sind beweglich und haben eine entsprechende Betriebmittelversorgung, die gemäß Figur 10 über die Andockstellen (23) und entsprechende Leitungen (35) in oder an der Trageinrichtung (17) hergestellt wird.

Die Tragarme (24) können starr oder beweglich an der Trageinrichtung (17) angeordnet sein. Im gezeigten und bevorzugten Ausführungsbeispiel sind zumindest ein Teil der Tragarme (24) beweglich angeordnet und besitzen ein oder mehrere Stellachsen (32,33). Die Tragarme (24) lassen sich dabei in der gewünschten Stellung mittels einer Blockiereinrichtung (34) arretieren.

Wie Figur 4 bis 10 verdeutlichen, wird die ein- oder mehrachsige Verstellbarkeit der Tragarme (24) z.B. über Stellschlitten (30,31) mit ein oder mehreren linearen Stellachsen (32,33) bewirkt. Der Stellschlitten (30) ist z.B. ein an der Unterseite der Trageinrichtung (17) angebrachter und an der Seitenwand abgestützter Kreuzschlitten. Der am abtriebseitigen Schlittenelement angeordnete und dort ein- oder mehrfach vorhandene Tragarm (24) kann hierdurch in der Stellachse (33) in Längsrichtung der Trageinrichtung (17) verstellt werden. Mittels der Stellachse (32) ist eine Querverstellung möglich, wobei der Tragarm (24) mehr oder weniger tief in den Freiraum (20) ragt. Der Schlitten (31) ist ein Einfachschlitten, der z.B. nur die eine quer gerichtete Stellachse (32) besitzt. In Abwandlung der gezeigten Ausführungsform können alternativ oder zusätzlich rotatorische Stellachsen vorhanden sein. Auch kann eine größere Zahl von Stellachsen geboten werden.

Die Blockiereinrichtung (34) ist von außen steuerbar und lässt sich im Notfall lösen. Sie wirkt auf die Stellachsen (32,33) und die zugehörigen Schlittenkomponenten. Sie besteht z.B. aus einem pneumatischen Klemmzylinder, der in Figur 9 schematisch angedeutet ist. Der Klemmzylinder ist mit einer Druckmittelleitung (35) verbunden, die über den zugehörigen Manipulator (15,16) angeschlossen ist und von einer entsprechenden Druckmittelquelle unter Anschluss an die Manipulatorsteuerung gespeist wird. Im Falle eines Notfalls fällt der Druck im Druckmittel ab, wobei der gelüftete Klemmzylinder unter der Wirkung einer Gegenfeder gelöst wird und die zugehörige Schlittenkomponente freigibt. Der Stellschlitten (30,31) lässt sich dadurch frei bewegen, so dass das Werkstück (9) schwimmend in der Trageinrichtung (17) gehalten ist. Mit einer entsprechenden Notfallabschaltung können auch die vorerwähnten Haltevorrichtungen (41) ausgerüstet sein. Bei einem Nothalt und Stillstand der Bearbeitungsanlage (2) können auch die Aufnehmer (25) von den Bezugspunkten (10) gelöst werden, so dass das Werkstück (9) aus der Trageinrichtung (17) entnommen und z.B. mit einem Kran geborgen werden kann.

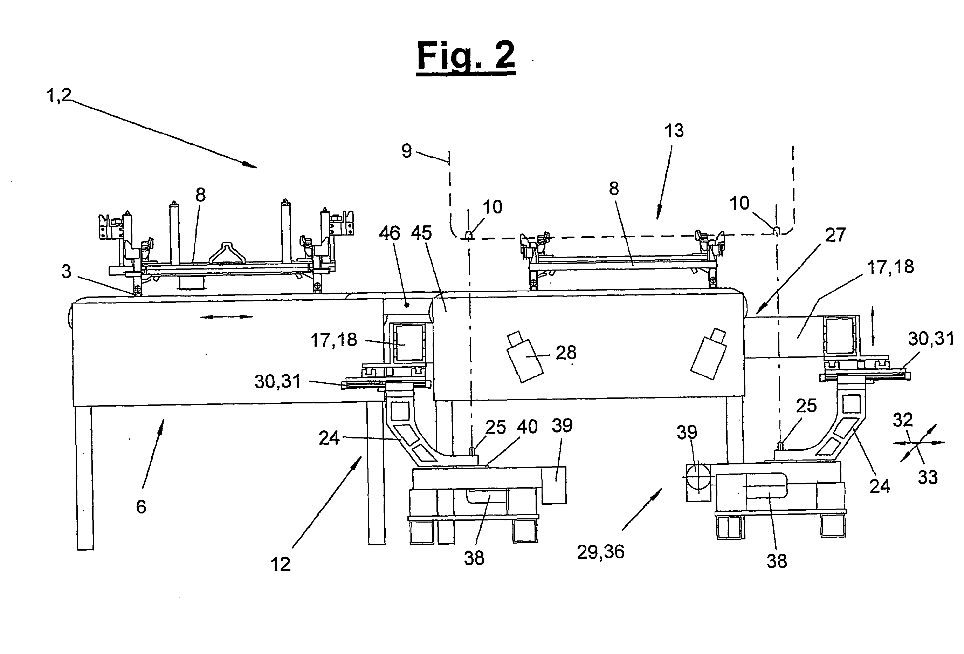

Die Handlingvorrichtung (12) bzw. die Bearbeitungsstation (2) besitzen ferner eine Positioniereinrichtung (27) für die gegenseitige Positionierung von Werkstück (9) und Trageinrichtung (17). Die Positioniereinrichtung (27) besitzt hierfür einen Positionsaufnehmer (28) zur Aufnahme der Werkstückposition. Dies kann z.B. das in Figur 2 gezeigte und im Aufnahmebereich (13) unterhalb des Werkstücks (9) angeordnete Kamerasystem sein, mit dem die Werkstückunterseite in ihrer Lage und Orientierung aufgenommen und gemessen wird. Hierbei kann auch die Lage der Bezugspunkte (10) festgestellt und vermessen werden. Alternativ kann der Positionsaufnehmer (28) in beliebig anderer geeigneter Weise ausgebildet sein und z.B. aus mechanischen Aufnehmern oder sonstigen Detektoren oder Sensoren mit Bauteilkontakt oder berührungsloser Wirkung bestehen.

Um das Werkstück (9) und die Trageinrichtung (17) in die zur Aufnahme erforderliche Relativlage zu bringen, ist eine Stelleinrichtung (29) vorhanden, die mit dem Positionsaufnehmer (28) verbunden ist und von diesem die Lage- und Orientierungsinformationen zum Werkstück (9) erhält. In der gezeigten Ausführungsform wird die Trageinrichtung (17) mit ihren Tragarmen (24) an das Werkstück (9) angepasst, wobei die Stelleinrichtung (29) zur Positionsverstellung der Tragarme (24) dient. Alternativ kann die Stelleinrichtung auf die Karosserie (9) einwirken und diese relativ zur Trageinrichtung (17) ausrichten und in Aufnahmeposition bringen.

Die gezeigte Tragarmverstellung hat den Vorteil, dass hierüber auch eine Anpassung der Tragarme (24) an unterschiedliche Werkstücktypen und insbesondere unterschiedliche Karosserietypen möglich ist. Hierdurch lassen sich mit der gleichen Trageinrichtung (17) z.B. unterschiedlich lange Bodengruppen mit entsprechend unterschiedlich positionierten Bezugspunkten (10) aufnehmen. Eventuell nicht benötigte Tragarme (24) können entfernt oder wegbewegt, z.B. abgeklappt, werden.

Die Stelleinrichtung (29) kann wahlweise einen extern angeordneten Stellantrieb (36) oder einen intern an der Trageinrichtung (17) angeordneten Stellantrieb (37) für ein oder mehrere Tragarme (24) aufweisen. Figur 1 bis 9 zeigen die Variante mit dem externen und stationären Stellantrieb (36). Figur 10 zeigt an einem Tragrahmen (18) beide Varianten, wobei in der oberen Bildhälfte ein interner Stellantrieb (37) dargestellt ist.

Wie Figur 1 bis 3 verdeutlichen, ist am Aufnahmebereich (13) eine Stützeinrichtung (45) vorhanden, die zwei stirnseitige und in Werkstücklängsrichtung beabstandete Ständer aufweist, auf denen das Werkstück (9) direkt oder mit seinem Skid (8) abgesetzt werden kann. Die Trageinrichtung (17) ist dabei zuvor am Aufnahmebereich (13) in abgesenkter Stellung positioniert worden und befindet sich unterhalb des Werkstücks (9). Hierfür ist ein Abstand (46) zwischen der Stützeinrichtung (45) und der Übergabestelle (6) bzw. der dortigen Fördereinrichtung (3) vorhanden, durch den der dortige Teil der Trageinrichtung (17) eintauchen kann.

Die Trageinrichtung (17) wird soweit abgesenkt, dass ihre Tragarme (24) mit dem externen Stellantrieb (36) in Kontakt treten. Dieser besteht z.B. aus mehreren Antriebseinheiten (38,39), die über entsprechende Mitnehmer (40) formschlüssig an den Tragarmen (24) angreifen und diese bei gelösten Blockiereinrichtungen (34) in die gemäß Positionsaufnehmer (28) benötigte Position bringen. Die Antriebseinheiten (38,39) können z.B. Kreuzschlitten sein, mit denen die Stellschlitten (30,31) entlang ihrer Stellachsen (32,33) bewegt und verstellt werden. Etwaige Drehlagenfehler der Karosserie (9) über die Hochachse werden durch eine entsprechende Drehbewegung der Trageinrichtung (17) aufgenommen. Die ebenfalls an den Positionsaufnehmer (28) und dessen Auswerteeinheit angeschlossenen Manipulatoren (15,16) bewegen hierzu die Trageinrichtung (17) entsprechend dem Aufnahmebereich (13).

Der externe Stellantrieb (36) entlastet die Trageinrichtung (17) gewichtsmäßig. Die entsprechenden Antriebs- und Steuereinheiten können stationär und in entsprechender Zahl und Position angeordnet sein. Bei der in Figur 10 im oberen Bildteil dargestellten Variante des internen Stellantriebs (37) befinden sich die Antriebseinheiten (38,39) an den Stellschlitten (30,31) und den Stellachsen (32,33). Bei dieser Ausführungsform ist die Blockiereinrichtung in die Antriebseinheiten (38,39) integriert, so dass bei einem Nothalt ebenfalls die Stellachsen (32,33) freigegeben werden können. Die Antriebseinheiten (38,39) sind über Leitungen (35) in oder an der Trageinrichtung (17) mit den Andockstellen (23) und weiter mit einer externen Betriebsmittel- und Signalversorgung verbunden. Die externen und internen Stellantriebe (36,37) können mit der vorerwähnten gemeinsamen Steuerung der Manipulatoren (15,16) verbunden sein, die vorzugsweise auch die Steuerung und Auswerteeinrichtung des Positionsaufnehmers (28) integriert oder angebunden ist. Die Antriebseinheiten (38,39) können in beliebig geeigneter Weise ausgebildet sein und z.B. als pneumatische oder hydraulische Antriebe, elektromotorische Antriebe oder dgl. gestaltet sein.

Figur 13 zeigt eine Fertigungsanlage (1), in der entlang einer Fördereinrichtung (3) mehrere Bearbeitungsstationen (2) in Reihe angeordnet sind. Die Fördereinrichtung (3) kann eine gerade oder beliebig gebogene Form haben. Im gezeigten Ausführungsbeispiel ist es ein Schienenförderer für bewegliche Förderelemente (8), insbesondere Skids. Die Skids werden an der Übergabestelle (6) der einzelnen Bearbeitungsstationen (2) mittels der vorerwähnten Zwischenförderer (7) in den Aufnahmebereich (13) verfrachtet. Die Zwischenförderer (7) können hierfür z.B. als Querförderer und insbesondere als Teleskopförderer ausgebildet sein, die den vorerwähnten Abstand (46) zur der Stützeinrichtung (45) und Übergabestelle (6) temporär für den Fördervorgang überbrücken und dann wieder für die Hebe- und Senkbewegung der Trageinrichtung (17) freigeben. Wenn der Skid (8) sich im Aufnahmebereich (13) befindet, ist die Übergabestelle (6) frei, so dass der nächste Skid (8) die Bearbeitungsstation (2) passieren kann.

Die Fördereinrichtung (3) kann in der einfachsten Form eine einfache Förderlinie haben. In der gezeigten Variante sind jedoch für die Stationsreihe zwei oder mehr Förderlinien (4,5) vorhanden, die vorzugsweise parallel laufen und durch Querverbindungen (47) gekoppelt sind.

Über die Querverbindungen können Ausweichstrecken oder Überholstrecken geschaffen werden. Eine gerade blockierte Übergabestelle (6) kann dadurch von anderen Förderelementen (8) und Werkstücken (9) umfahren werden. Durch diese Fördertechnik können alle Bearbeitungsstationen (2) selektiv und auf direktem Wege angefahren werden. Die Bearbeitungsprozesse in den einzelnen Bearbeitungsstationen (2) können außerdem unterschiedliche Taktzeiten haben, wobei die Fördertechnik von den Taktzeiten losgelöst ist. Durch diese Entkopplung können die Bearbeitungsstationen (2) maximal ausgelastet werden. Außerdem betreffen Störungen nur die einzelne Bearbeitungsstation (2) und führen nicht zu einem Stillstand der gesamten Fertigungsanlage. Bei Ausfall einer Bearbeitungsstation (2) können andere Stationen (2) deren Bearbeitungsprozesse übernehmen. Hierfür sind die Bearbeitungsstationen (2) entsprechend maschinell und gerätetechnisch ausgerüstet und besitzen entsprechend umschaltbare Steuerprogramme.

Figur 13 zeigt außerdem die Variante, dass zwei Straßen von jeweils mehreren in Reihe hintereinander angeordneten Bearbeitungsstationen (2) vorhanden sind. Hierdurch kann auf kürzestem Raum und mit einer hoch flexiblen Fördertechnik eine sehr komplexe Bearbeitung des Werkstücks (9) und insbesondere von Karosseriebaugruppen, erfolgen.

Abwandlungen der gezeigten Ausführungsformen sind in verschiedener Weise möglich. Dies betrifft zum einen die Zahl und Anordnung sowie auch Ausbildung der Manipulatoren (15,16). Ferner kann die Trageinrichtung (17) über die dargestellten Varianten hinaus abgewandelt werden. Die Trageinrichtung (17) kann z.B. andere Tragelemente an Stelle der gezeigten Tragarme (24) aufweisen und an anderen Stellen des Werkstücks, z.B. dem Dachbereich einer Rohkarosserie, angreifen. Ggf. können zwei oder mehr Manipulatoren (15,16) über Eck an einer Trageinrichtung gemeinsam angreifen und diese handhaben und führen. Die Manipulatoren (15,16) sind in den gezeigten Ausführungsformen stehend angeordnet. Sie können alternativ hängend an einem Portal oder an einer Wand angeordnet sein. Variabel ist außerdem die Fördertechnik. Der Aufnahmebereich (13) kann z.B. in die Fördereinrichtung (3) integriert werden, wodurch die Übergabestelle (6) und der Zwischenförderer (7) entfallen. Konstruktive Änderungen sind bei der Positioniereinrichtung (27) und deren Komponenten, insbesondere bei der Stelleinrichtung (29) und den Stellantrieben (36,37) möglich.

### BEZUGSZEICHENLISTE

- 1: Fertigungsanlage
- 2: Bearbeitungsstation
- 3: Fördereinrichtung
- 4: Förderlinie
- 5: Förderlinie
- 6: Übergabestelle
- 7: Zwischenförderer, Querförderer
- 8: Förderelement, Skid
- 9: Werkstück, Baugruppe, Karosseriebaugruppe
- 10: Bezugspunkt, Masterhole
- 11: Bearbeitungsvorrichtung
- 12: Handlingvorrichtung
- 13: Aufnahmebereich
- 14: Bearbeitungsbereich
- 15: Manipulator, Roboter
- 16: Manipulator, Roboter
- 17: Trageinrichtung
- 18: Tragrahmen
- 19: Rahmengestell
- 20: Freiraum
- 21: Tragbalken
- 22: Tragbalken
- 23: Andockstelle
- 24: Tragelement, Tragarm
- 25: Aufnehmer, Dorn, Stift
- 26: Halteelement, Haltenase
- 27: Positioniereinrichtung
- 28: Positionsaufnehmer, Kamerasystem
- 29: Stelleinrichtung
- 30: Stellschlitten, Kreuzschlitten
- 31: Stellschlitten, Einachsschlitten
- 32: Stellachse
- 33: Stellachse
- 34: lösbare Blockiereinrichtung, pneumatische Klemmung
- 35: Leitung, Druckluftleitung, Steuerleitung
- 36: Stellantrieb extern
- 37: Stellantrieb intern
- 38: Antriebseinheit
- 39: Antriebseinheit
- 40: Mitnehmer
- 41: Haltevorrichtung
- 42: Karosserieblech
- 43: Karosserieblech
- 44: Hohlraum
- 45: Stützeinrichtung
- 46: Abstand, Freiraum
- 47: Querverbindung

## Patentansprüche

1. Verfahren zum mehrachsigen Handhaben und Führen von Werkstücken (9), insbesondere Karosseriebaugruppen, in einer Bearbeitungsstation (2), wobei die Werkstücke (9) auf einer Trageinrichtung (17) angeordnet werden und zusammen mit der Trageinrichtung (17) von mehreren mehrachsig beweglichen Manipulatoren (15,16) in gemeinsamen aufeinander abgestimmten Bewegungen beim Bearbeitungsprozess relativ zu ein oder mehreren Bearbeitungsvorrichtungen (11) gehandhabt und geführt werden.

2. Verfahren nach Anspruch 1, **dadurch gekennzeichnet, dass** das Werkstück (9) an einem Aufnahmebereich (13) von den Manipulatoren (15,16) mit der Trageinrichtung (17) aufgenommen und zu einem räumlich getrennt angeordneten Bearbeitungsbereich (14) und wieder zurück transportiert wird.

3. Verfahren nach Anspruch 1 oder 2, **dadurch gekennzeichnet, dass** das Werkstück (9) von den Manipulatoren (15,16) mit der Trageinrichtung (17) im Bearbeitungsbereich (14) in verschiedene prozessgünstige Lagen und Orientierungen gebracht wird.

4. Verfahren nach Anspruch 1, 2 oder 3, **dadurch gekennzeichnet, dass** das Werkstück (9) zur Bearbeitung unterer Partien gedreht und gewendet wird, wobei die Bearbeitung im wesentlichen von oben her erfolgt.

5. Handlingvorrichtung zum mehrachsigen Handhaben und Führen von Werkstücken (9), insbesondere Karosseriebaugruppen, in einer Bearbeitungsstation (2), wobei die Handlingvorrichtung (12) mehrere mehrachsig bewegliche Manipulatoren (15,16) aufweist, die gemeinsam und in aufeinander abgestimmten Bewegungen eine Trageinrichtung (17) mit dem darauf anordenbaren Werkstück (9) beim Bearbeitungsprozess relativ zu ein oder mehreren Bearbeitungsvorrichtungen (11) handhaben und führen.

6. Handlingvorrichtung nach Anspruch 5, **dadurch gekennzeichnet, dass** die Manipulatoren (15,16) als mehrachsige Gelenkarmroboter ausgebildet sind.

7. Handlingvorrichtung nach Anspruch 5 oder 6, **dadurch gekennzeichnet, dass** die Trageinrichtung (17) an mindestens zwei verschiedenen Seiten, vorzugsweise an gegenüberliegenden Schmalseiten, eine Andockstelle (23) zur Verbindung mit einem Manipulator (15,16) aufweist.

8. Handlingvorrichtung nach einem der vorhergehenden Ansprüche, **dadurch gekennzeichnet, dass** die Trageinrichtung (17) als Tragrahmen (18) ausgebildet ist, der ein umlaufendes und das Werkstück (9) außen umgebendes Rahmengestell (19) mit einem innen liegenden Freiraum (20) aufweist.

9. Handlingvorrichtung nach einem der vorhergehenden Ansprüche, **dadurch gekennzeichnet, dass** die Trageinrichtung (17) mehrere Tragarme (24) mit mindestens einem, an einen Bezugspunkt (10) des Werkstücks (9) angepassten, Aufnehmer (25), insbesondere einem vorstehender Dorn oder Stift für das Zusammenwirken mit einem Masterhole am Werkstück (9), aufweisen.

10. Handlingvorrichtung nach einem der vorhergehenden Ansprüche, **dadurch gekennzeichnet, dass** die Tragarme (24) eine gebogene Form aufweisen und an der Unterseite der Trageinrichtung (17) angeordnet sind, wobei sie in den Freiraum (20) des Tragrahmens (18) ragen.

11. Handlingvorrichtung nach einem der vorhergehenden Ansprüche, **dadurch gekennzeichnet, dass** die Handlingvorrichtung (12) eine Positioniereinrichtung (27) für die gegenseitige Positionierung von Werkstück (9) und Trageinrichtung (17) aufweist, wobei die Positioniereinrichtung (27) einen Positionsaufnehmer (28) für die Werkstückposition besitzt.

12. Handlingvorrichtung nach einem der vorhergehenden Ansprüche, **dadurch gekennzeichnet, dass** die Positioniereinrichtung (27) eine Stelleinrichtung (29) zur Positionsverstellung der Tragarme (24) aufweist.

13. Handlingvorrichtung nach einem der vorhergehenden Ansprüche, **dadurch gekennzeichnet, dass** die Tragarme (24) in ein oder mehreren Achsen (32,33) beweglich und arretierbar an der Trageinrichtung (17) angeordnet sind.

14. Handlingvorrichtung nach einem der vorhergehenden Ansprüche, **dadurch gekennzeichnet, dass** die Tragarme (24) einen Stellschlitten (30,31) mit ein oder mehreren Stellachsen (32,33) und einer steuerbaren und lösbaren Blockiereinrichtung (34) aufweisen.

15. Handlingvorrichtung nach einem der vorhergehenden Ansprüche, **dadurch gekennzeichnet, dass** die Stelleinrichtung (29) einen extern angeordneten Stellantrieb (36) oder einen intern an der Trageinrichtung (17) angeordneten Stellantrieb (37) für ein oder mehrere Tragarme (24) aufweist.

16. Handlingvorrichtung nach einem der vorhergehenden Ansprüche, **dadurch gekennzeichnet, dass** die Trageinrichtung (17) ein oder mehrere mit einer Andockstelle (23) verbundene Leitungen (35) zur Betriebsmittel- und/oder Signalversorgung der Blockiereinrichtung (34) und/oder des Stellantriebs (37) aufweist.

17. Bearbeitungsstation mit mindestens einer Handlingvorrichtung (12) nach einem der vorhergehenden Ansprüche, **dadurch gekennzeichnet, dass** die Bearbeitungsstation (2) einen Bearbeitungsbereich (14) mit ein oder mehreren Bearbeitungsvorrichtungen (11) und einen an eine Fördereinrichtung (3) angeschlossenen Aufnahmebereich (13) für die Werkstücke (9) aufweist, wobei die Handlingvorrichtung (12) beide Bereiche (13,14) bedient.

18. Bearbeitungsstation nach Anspruch 17, **dadurch gekennzeichnet, dass** die Fördereinrichtung (3) ein oder mehrere bewegliche Förderelemente (8) zur Aufnahme der Werkstücke (9) aufweist.

19. Bearbeitungsstation nach Anspruch 17 oder 18, **dadurch gekennzeichnet, dass** die Fördereinrichtung (3) eine Übergabestelle (6) für die Werkstücke (9) aufweist, wobei der Aufnahmebereich (13) neben der Übergabestelle (6) angeordnet und mit dieser über einen Zwischenförderer (7) verbunden ist.

20. Bearbeitungsstation nach Anspruch 17, 18 oder 19, **dadurch gekennzeichnet, dass** im Aufnahmebereich (13) eine Stützeinrichtung (45) für das Werkstück (9) oder das Förderelement (8) angeordnet ist, die mit einem Abstand (46) zur Übergabestelle (6) angeordnet ist und eine zur Trageinrichtung (17) handlingkompatible Form aufweist, wobei der Zwischenförderer (7) den Abstand (46) temporär überbrückt.

21. Fertigungsanlage mit mehreren Bearbeitungsstationen (2) nach einem der Ansprüche 17 bis 20, **dadurch gekennzeichnet, dass** mehrere Bearbeitungsstationen (2) in Reihe angeordnet sind und eine gemeinsame Fördereinrichtung (3) aufweisen, welche mehrere parallele Förderlinien (4,5) mit stationsweisen Querverbindungen (47) aufweisen.

## Claims

1. Method for the multi-axis handling and guiding of workpieces (9), in particular body assembly groups, in a processing station (2), wherein the workpieces (9) are arranged on a supporting device (17) and are handled and guided, together with the supporting device (17), relative to one or more processing apparatuses (11) in joint movements, adapted to one another, during the processing by a plurality of manipulators (15, 16) movable in multiple axes.

2. Method according to Claim 1, **characterized in that** the workpiece (9) is mounted at a mounting region (13) by the manipulators (15, 16) together with the supporting device (17) and is transported to a processing region (14), arranged in a spatially separate manner, and back again.

3. Method according to Claim 1 or 2, **characterized in that** the workpiece (9) is brought into various positions and orientations favourable for the process in the processing region (14) by the manipulators (15, 16) together with the supporting device (17).

4. Method according to Claim 1, 2 or 3, **characterized in that** the workpiece (9) is rotated and turned for processing lower parts, the processing being effected substantially from above.

5. Handling apparatus for the multi-axis handling and guiding of workpieces (9), in particular body assembly groups, in a processing station (2), wherein the handling apparatus (12) has a plurality of manipulators (15, 16) which are movable in multiple axes and which jointly handle and guide, in movements adapted to one another, a supporting device (17) having the workpiece (9), which can be arranged thereon, relative to one or more processing apparatuses (11) during the processing.

6. Handling apparatus according to Claim 5, **characterized in that** the manipulators (15, 16) are designed as multi-axis jointed-arm robots.

7. Handling apparatus according to Claim 5 or 6, **characterized in that** the supporting device (17) has a docking point (23) for connecting to a manipulator (15, 16) on at least two different sides, preferably on opposite narrow sides.

8. Handling apparatus according to one of the preceding claims, **characterized in that** the supporting device (17) is designed as a supporting frame (18) which has an encircling rack (19) surrounding the workpiece (9) on the outside and having a free space (20) on the inside.

9. Handling apparatus according to one of the preceding claims, **characterized in that** the supporting device (17) has a plurality of supporting arms (24) having at least one mount (25), in particular a protruding mandrel or pin for the interaction with a master hole on the workpiece (9), said mount (25) being adapted to a reference point (10) of the workpiece (9).

10. Handling apparatus according to one of the preceding claims, **characterized in that** the supporting arms (24) have a curved shape and are arranged on the underside of the supporting device (17), in which arrangement they project into the free space (20) of the supporting frame (18).

11. Handling apparatus according to one of the preceding claims, **characterized in that** the handling apparatus (12) has a positioning device (27) for the mutual positioning of workpiece (9) and supporting device (17), the positioning device (27) having a position sensor (28) for the workpiece position.

12. Handling apparatus according to one of the preceding claims, **characterized in that** the positioning device (27) has an actuating device (29) for adjusting the position of the supporting arms (24).

13. Handling apparatus according to one of the preceding claims, **characterized in that** the supporting arms (24) are arranged on the supporting device (17) such that they can be moved in one or more axes (32, 33) and can be locked in position.

14. Handling apparatus according to one of the preceding claims, **characterized in that** the supporting arms (24) have an adjusting slide (30, 31) having one or more adjusting axes (32, 33) and a controllable and releasable blocking device (34).

15. Handling apparatus according to one of the preceding claims, **characterized in that** the actuating device (29) has an externally arranged actuating drive (36), or an actuating drive (37) arranged internally on the supporting device (17), for one or more supporting arms (24).

16. Handling apparatus according to one of the preceding claims, **characterized in that** the supporting device (17) has one or more conduits (35), connected to a docking point (23), for supplying operating media and/or signals to the blocking device (34) and/or to the actuating drive (37).

17. Processing station having at least one handling apparatus (12) according to one of the preceding claims, **characterized in that** the processing station (2) has a processing region (14) having one or more processing apparatuses (11) and a mounting region (13), attached to a conveying device (3), for the workpieces (9), the handling apparatus (12) serving both regions (13, 14).

18. Processing station according to Claim 17, **characterized in that** the conveying device (3) has one or more movable conveying elements (8) for mounting the workpieces (9).

19. Processing station according to Claim 17 or 18, **characterized in that** the conveying device (3) has a transfer point (6) for the workpieces (9), the mounting region (13) being arranged next to the transfer point (6) and being connected to the latter via an intermediate conveyor (7).

20. Processing station according to Claim 17, 18 or 19, **characterized in that** a support means (45) for the workpiece (9) or the conveying element (8) is arranged in the mounting region (13), said support means (45) being arranged at a distance (46) from the transfer point (6) and having a shape compatible with the supporting device (17) in terms of the handling, the intermediate conveyor (7) temporarily bridging the distance (46).

21. Production plant having a plurality of processing stations (2) according to one of Claims 17 to 20, **characterized in that** a plurality of processing stations (2) are arranged in series and have a common conveying device (3) which has a plurality of parallel conveying lines (4, 5) having cross connections (47) station by station.

## Revendications

1. Procédé pour la manipulation et la conduite multiaxiales de pièces (9), en particulier de modules de carrosserie, dans une station d'usinage (2), dans lequel les pièces (9) sont disposées sur un dispositif de support (17) et elles sont manipulées et conduites en même temps que le dispositif de support (17) par plusieurs manipulateurs (15, 16) mobiles selon plusieurs axes, en des mouvements coordonnés lors d'un processus d'usinage, par rapport à un ou plusieurs dispositifs d'usinage (11).

2. Procédé selon la revendication 1, **caractérisé en ce que** la pièce (9) est placée avec le dispositif de support (17) sur une zone de réception (13) par les manipulateurs (15, 16) et elle est transportée vers une zone d'usinage (14) disposée en une position spatialement séparée, et ensuite de nouveau ramenée.

3. Procédé selon la revendication 1 ou 2, **caractérisé en ce que** la pièce (9) est amenée par les manipulateurs (15, 16) avec le dispositif de support (17) dans différentes positions et orientations favorables pour le traitement dans la zone d'usinage (14).

4. Procédé selon la revendication 1, 2 ou 3, **caractérisé en ce que** la pièce (9) est tournée et retournée pour l'usinage de parties inférieures, dans lequel l'usinage est effectué essentiellement par le haut.

5. Dispositif de manipulation pour la manipulation et la conduite multiaxiales de pièces (9), en particulier de modules de carrosserie, dans une station d'usinage (2), dans lequel le dispositif de manipulation (12) comprend plusieurs manipulateurs (15, 16) mobiles selon plusieurs axes, qui manipulent et conduisent ensemble et en des mouvements coordonnés un dispositif de support (17) avec la pièce (9) pouvant être montée dessus lors du processus d'usinage, par rapport à un ou plusieurs dispositifs d'usinage (11).

6. Dispositif de manipulation selon la revendication 5, **caractérisé en ce que** les manipulateurs (15, 16) se présentent sous la forme d'un robot à bras articulés à plusieurs axes.

7. Dispositif de manipulation selon la revendication 5 ou 6, **caractérisé en ce que** le dispositif de support (17) présente sur au moins deux côtés différents, de préférence sur des côtés étroits opposés, un point d'amarrage (23) pour la liaison avec un manipulateur (15, 16).

8. Dispositif de manipulation selon l'une quelconque des revendications précédentes, **caractérisé en ce que** le dispositif de support (17) se présente sous la forme d'un cadre porteur (18), qui présente un châssis de cadre (19) périphérique et entourant extérieurement la pièce (9), avec un espace libre (20) situé à l'intérieur.

9. Dispositif de manipulation selon l'une quelconque des revendications précédentes, **caractérisé en ce que** le dispositif de support (17) présente plusieurs bras porteurs (24) avec au moins un détecteur (25) adapté à un point de référence (10) de la pièce (9), en particulier un tourillon ou une tige en saillie, destiné à coopérer avec un trou maître de la pièce (9).

10. Dispositif de manipulation selon l'une quelconque des revendications précédentes, **caractérisé en ce que** les bras de support (24) présentent une forme courbe et sont disposés sur la face inférieure du dispositif de support (17), dans lequel ils pénètrent dans l'espace libre (20) du cadre porteur (18).

11. Dispositif de manipulation selon l'une quelconque des revendications précédentes, **caractérisé en ce que** le dispositif de manipulation (12) comprend un dispositif de positionnement (27) pour le positionnement mutuel de la pièce (9) et du dispositif de support (17), dans lequel le dispositif de positionnement (27) comporte un détecteur de position (28) pour la position de la pièce.

12. Dispositif de manipulation selon l'une quelconque des revendications précédentes, **caractérisé en ce que** le dispositif de positionnement (27) comprend un dispositif de réglage (29) pour le réglage de la position des bras porteurs (24).

13. Dispositif de manipulation selon l'une quelconque des revendications précédentes, **caractérisé en ce que** les bras porteurs (24) sont disposés sur le dispositif de support (17) en pouvant être déplacés et bloqués dans un ou plusieurs axes (32, 33).

14. Dispositif de manipulation selon l'une quelconque des revendications précédentes, **caractérisé en ce que** les bras porteurs (24) comprennent un chariot de réglage (30, 31) avec un ou plusieurs axes de réglage (32, 33) et un dispositif de blocage (34) commandable et desserrable.

15. Dispositif de manipulation selon l'une quelconque des revendications précédentes, **caractérisé en ce que** le dispositif de réglage (29) comprend un entraînement de réglage (36) disposé à l'extérieur ou un entraînement de réglage (37) disposé à l'intérieur sur le dispositif de support (17) pour un ou plusieurs bras porteurs (24).

16. Dispositif de manipulation selon l'une quelconque des revendications précédentes, **caractérisé en ce que** le dispositif de support (17) présente une ou plusieurs conduites (35) raccordées à un point d'amarrage (23) pour l'alimentation en agent d'entraînement et/ou de signalisation du dispositif de blocage (34) et/ou de l'entraînement de réglage (37).

17. Station d'usinage avec au moins un dispositif de manipulation (12) selon l'une quelconque des revendications précédentes, **caractérisée en ce que** la station d'usinage (2) présente une zone d'usinage (14) avec un ou plusieurs dispositifs d'usinage (11) et une zone de réception (13) pour les pièces (9) reliée à une dispositif de transport (3), dans laquelle le dispositif de manipulation (12) commande deux zones (13, 14).

18. Station d'usinage selon la revendication 17, **caractérisée en ce que** le dispositif de transport (3) comprend un ou plusieurs éléments de transport (8) pour recevoir les pièces (9).

19. Station d'usinage selon la revendication 17 ou 18, **caractérisée en ce que** le dispositif de transport (3) présente un point de transfert (6) pour les pièces (9), dans laquelle la zone de réception (13) est disposée à côté du point de transfert (6) et est reliée à celui-ci par un transporteur intermédiaire (7).

20. Station d'usinage selon la revendication 17, 18 ou 19, **caractérisée en ce qu'**il se trouve dans la zone de réception (13) un dispositif d'appui (45) pour la pièce (9) ou l'élément de transport (8), qui est disposé à distance (46) du point de transfert (6) et qui présente une forme compatible avec la manipulation pour le dispositif de support (17), dans laquelle le transporteur intermédiaire (7) occupe temporairement la distance (46).

21. Installation de fabrication comportant plusieurs stations d'usinage (2) selon l'une quelconque des revendications 17 à 20, **caractérisée en ce que** plusieurs stations d'usinage (2) sont disposées en ligne et présentent un dispositif de transport commun (3), qui présente plusieurs lignes de transport parallèles (4, 5) avec des liaisons transversales (47) à la manière de stations.
